# EUROPEAN PATENT APPLICATION

(11) **EP 4 563 959 A1**
(43) Date of publication of application: **04.06.2025**
(21) Application number: 23879459.8
(22) Date of filing: 25.08.2023
(51) Int. Cl.: G01L 1/14, G01L 25/00, G06F 3/041

(54) **INPUT DEVICE INCLUDING FILM-TYPE FORCE SENSOR AND LOAD DETECTION METHOD FOR SAME**

(30) Priority: 17.10.2022 JP 2022166360
(71) Applicant: NISSHA CO., LTD., Kyoto-shi, Kyoto 604-8551 (JP)
(72) Inventor: SHIMADA, Mayumi, Kyoto-shi, Kyoto 604-8551 (JP); WATAZU, Yuji, Kyoto-shi, Kyoto 604-8551 (JP); TSUCHIYA, Shin-ichi, Kyoto-shi, Kyoto 604-8551 (JP); FUKUDA, Kengo, Kyoto-shi, Kyoto 604-8551 (JP); OBA, Fumi, Kyoto-shi, Kyoto 604-8551 (JP); MIURA, Tsutomu, Kyoto-shi, Kyoto 604-8551 (JP); SHIGENARI, Takuto, Kyoto-shi, Kyoto 604-8551 (JP)
(74) Representative: Winter, Brandl - Partnerschaft mbB
(86) International application number: PCT/JP2023/030648
(87) International publication number: WO 2024/084806

(57) **Abstract**

[Abstract]

There are provided an input device using a film-type force sensor that can acquire an updated baseline value at a suitable timing, thereby performing accurate load detection, and a load detection method for the input device. The input device according to the present invention includes a film-type force sensor and a control circuit. The control circuit includes a measurement data acquisition unit, a moving average data calculation unit, a load data calculation unit, a load data correction unit, a standard deviation calculation unit, a determination unit, a baseline update unit, and a storage unit. In a case where a standard deviation is less than or equal to a threshold, the determination unit determines that no load is applied to the film-type force sensor. The baseline update unit updates a baseline value by replacing the baseline value with a value at a time when it is determined that no load is applied in load data.

## Description

### Technical Field

The present invention relates to an input device using a film-type force sensor that can perform accurate load detection, and a load detection method for the input device.

### Background Art

In recent years, as a device for providing new ideas that cannot be realized by a joystick, a cross key, a mouse, and a touch panel, to a development site of a user interface (UI), a film-type triaxial force sensor is known.

The film-type triaxial force sensor can detect pressing force (pressure), a close-to-slipping state, a slipping state, and the like by measuring force in three-axis (XYZ-axis) directions at a contact point, and enables input of operation that cannot be controlled by an existing controller, such as twisting, rotating, and shifting, by one finger. The film-type triaxial force sensor can perform force (volume) measurement not limited to on/off determination, thereby coping with control of a speed, a moving amount, and the like. As compared with the joystick and the cross key, a direction and a moving amount can be simultaneously input by slight movement of the finger. Further, the film-type triaxial force sensor can be mounted on a curved surface because of a thin thickness and a light weight. The force in all the three-axis directions may not be measured, and for example, a sensor measuring only force in the XY axis directions may be usable.

Examples of the above-described film-type force sensor include a sensor of a capacitance system in which an upper electrode and a lower electrode are disposed to face each other with an air layer or an elastic layer in between, and values of an applied load are calculated by using change of capacitance values generated by variation in distance between the electrodes when force (hereinafter, unified to load) is applied (see Patent Literatures 1 and 2).

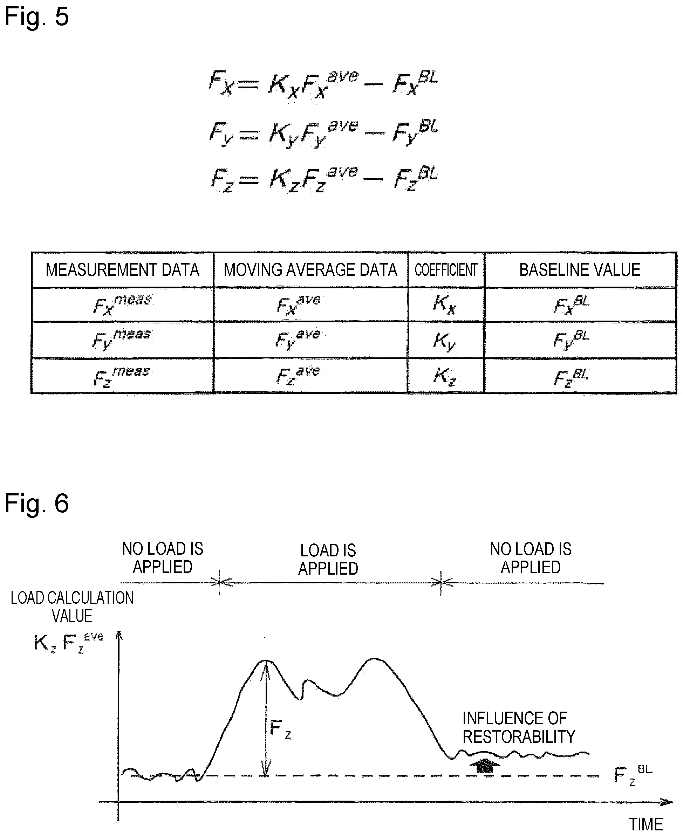

When the load is detected using the film-type force sensor of the capacitance system, it is necessary to perform correction by subtracting a baseline value (portion F_{z}^{BL} drawn by a thick broken line in the example illustrated in Figure 6) from a load calculation value (value K_{z}F_{z}^{ave} calculated in Z-axis direction in the example illustrated in Figure 6) based on the measured capacitance change amount (see Figure 5). The baseline value is load data calculated in a state where no load is applied to the film-type force sensor.

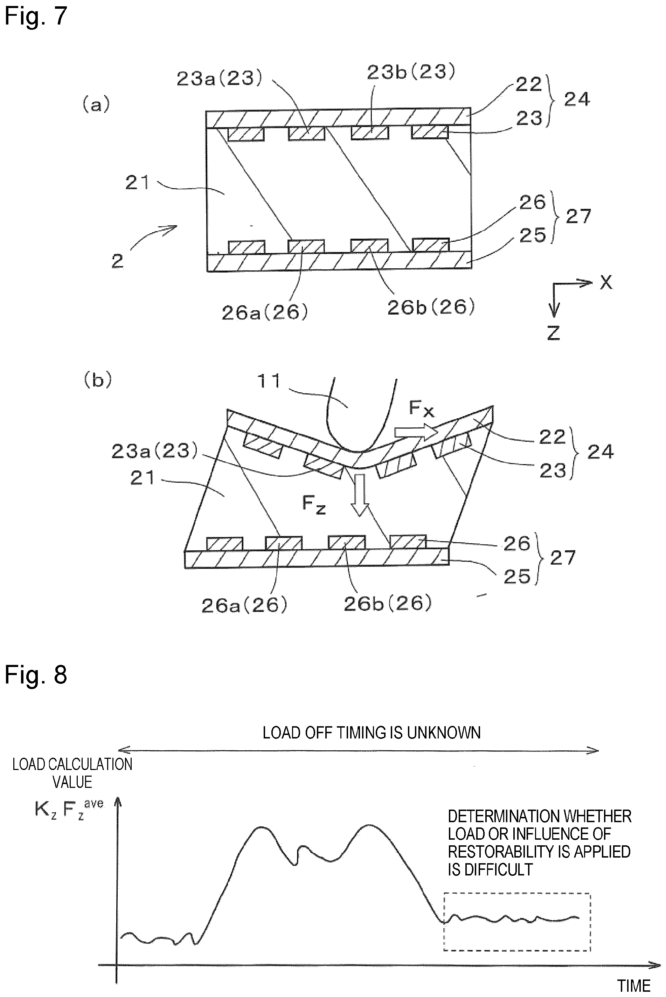

However, there is a problem that the load detection using the film-type force sensor of the capacitance system is affected by restorability. In other words, when the load is applied to deform the film-type force sensor (see Figure 7) and is then released, the film-type force sensor is still deformed and does not immediately return to a shape before the load is applied, and the capacitance value is increased from an initial value even in a no-load state. As a result, the load calculation value calculated from the capacitance values does not return to the baseline value in the no-load state (black arrow portion on right side in Figure 6).

Therefore, the capacitance values in the no-load state are transited on a moment-to-moment basis due to influence of restorability, and it is accordingly necessary to update the baseline value based on the transition.

### Citation List

### Patent Literature

Patent Literature 1: International Publication No. WO 2020/059766
Patent Literature 2: Japanese Patent Laid-Open No. 2017-156126

### Summary of Invention

### Technical Problem

The baseline value to be updated is acquired based on data on the load calculation value (value K_{z}F_{z}^{ave} calculated in Z-axis direction in the example illustrated in Figure 8) calculated in the state where no load is applied to the film-type force sensor; however, it is difficult to accurately determine whether, in the load data of a portion (portion surrounded by dashed line illustrated in Figure 8) where the load calculation value is rapidly reduced again, a load is applied to the film-type force sensor or the film-type force sensor is affected by restorability, from the load data. In other words, update of the baseline value is not easy.

Therefore, an object of the present invention is to solve the above-described problems, and to provide an input device using a film-type force sensor that can acquire an updated baseline value at a suitable timing, thereby performing accurate load detection, and a load detection method for the input device.

### Solution to Problem

As means for solving the problem, a plurality of aspects are described below. These aspects can be freely combined as necessary.

An input device according to one aspect of the present invention includes a film-type force sensor and a control circuit. The film-type force sensor is disposed on a surface of a housing, and detects capacitance values that change based on a load applied by a finger. The control circuit is electrically connected to the film-type force sensor, and housed inside the housing.

The control circuit of such an input device includes a measurement data acquisition unit, a moving average data calculation unit, a load data calculation unit, a load data correction unit, a standard deviation calculation unit, a determination unit, a baseline update unit, and a storage unit.

The measurement data acquisition unit acquires measurement data including a time series of capacitance change amounts detected by the film-type force sensor. The moving average data calculation unit calculates moving average data by smoothing fine variation of the measurement data with any number of terms. The load data calculation unit calculates load data by multiplying each value of the moving average data by any coefficient indicating sensitivity of the film-type force sensor. The load data correction unit corrects the load data by subtracting a baseline value from each value of the load data. The standard deviation calculation unit calculates a standard deviation within any time range from each time point of the load data. In a case where the standard deviation is greater than any threshold, the determination unit determines that a load is applied to the film-type force sensor, and in a case where the standard deviation is less than or equal to the threshold, the determination unit determines that no load is applied to the film-type force sensor. In a case where it is determined that no load is applied, the baseline update unit updates the baseline value by replacing the baseline value with a value at a time when it is determined that no load is applied in the load data. The storage unit stores the acquired value, the calculated value, the updated value, and the corrected value.

In the above-described input device, the baseline update unit may update the baseline value every time a no-load state occurs during a period from a time when it is determined that no load is applied until a time when it is determined that a load is applied again.

In the above-described input device, the baseline update unit may update the baseline value to a latest value at the time when it is determined that no load is applied in the load data, at predetermined time intervals after acquisition of the measurement data is started.

In the above-described input device, the film-type force sensor may be a film-type triaxial force sensor detecting capacitance values that change based on a load applied in three axes XYZ.

A load detection method for an input device according to another aspect of the present invention is a load detection method for an input device including a film-type force sensor and a control circuit. The film-type force sensor is disposed on a surface of a housing, and detects capacitance values that change based on a load applied by a finger. The control circuit is electrically connected to the film-type force sensor, and housed inside the housing.

The load detection method for such an input device includes a measurement data acquisition step, a moving average data calculation step, a load data calculation step, a load data correction step, a standard deviation calculation step, a determination step, a baseline update step, and a storage step.

In the measurement data acquisition step, measurement data including a time series of capacitance change amounts detected by the film-type force sensor is acquired. In the moving average data calculation step, moving average data is calculated by smoothing fine variation of the measurement data with any number of terms. In the load data calculation step, load data is calculated by multiplying each value of the moving average data by any coefficient indicating sensitivity of the film-type force sensor. In the load data correction step, the load data is corrected by subtracting a baseline value from each value of the load data. In the standard deviation calculation step, a standard deviation within any time range from each time point of the load data is calculated. In the determination step, in a case where the standard deviation is greater than any threshold, it is determined that a load is applied to the film-type force sensor, and in a case where the standard deviation is less than or equal to the threshold, it is determined that no load is applied to the film-type force sensor. In the baseline update step, in a case where it is determined that no load is applied, the baseline value is updated by replacing the baseline value with a value at a time when it is determined that no load is applied. In the storage step, the acquired value, the calculated value, the updated value, and the corrected value are stored.

In the above-described load detection method for the input device, in the baseline update step, the baseline value may be updated every time a no-load state occurs during a period from a time when it is determined that no load is applied until a time when it is determined that a load is applied again.

In the above-described load detection method for the input device, in the baseline update step, the baseline value may be updated to a latest value at the time when it is determined that no load is applied in the load data, at predetermined time intervals after acquisition of the measurement data is started.

In the above-described load detection method for the input device, the film-type force sensor may be a film-type triaxial force sensor detecting capacitance values that change based on a load applied in three axes XYZ.

### Advantageous Effects of Invention

The input device using the film-type force sensor and the load detection method for the input device according to the present invention can acquire the updated baseline value at a suitable timing, thereby performing accurate load detection.

### Brief Description of Drawings

[Figure 1] Figure 1 is a schematic diagram of a controller that is an example of an input device using a film-type force sensor according to the present invention.
[Figure 2] Figure 2 is a configuration diagram of the input device using the film-type force sensor according to the present invention.
[Figure 3] Figure 3 is a conceptual diagram illustrating relationship between a time series of a load calculation value (K_{z}F_{z}^{ave}) in a Z-axis and a baseline value (F_{z}^{BL}) in a case where the baseline value is updated in a load detection method for the input device using the film-type force sensor according to the present invention (same applies to X-axis and Y-axis).
[Figure 4] Figure 4 is a flowchart illustrating an example of a load detection process in the input device using the film-type force sensor according to the present invention.
[Figure 5] Figure 5 illustrates calculation expressions of corrected loads Fₓ, F_{y}, and F_{z}.
[Figure 6] Figure 6 is a conceptual diagram illustrating the relationship between the time series of the load calculation value (K_{z}F_{z}^{ave}) in the Z-axis and the baseline value (F_{z}^{BL}) in a case where the baseline value is not updated (same applies to X-axis and Y-axis).
[Figure 7] Figure 7 is a schematic diagram illustrating a principle of a film-type force sensor of a capacitance system.
[Figure 8] Figure 8 is a conceptual diagram illustrating a problem of an update timing of the baseline value (same applies to X-axis and Y-axis).
[Figure 9] Figure 9 is another configuration diagram of the input device using the film-type force sensor according to the present invention.
[Figure 10] Figure 10 is a flowchart illustrating another example of the load detection process in the input device using the film-type force sensor according to the present invention.
[Figure 11] Figure 11 is a schematic diagram illustrating a configuration example of a film-type triaxial force sensor of a capacitance system.

### Description of Embodiments

### [First Embodiment]

A first embodiment of the present invention is described below with reference to drawings.

### (1) Entire Configuration of Input Device

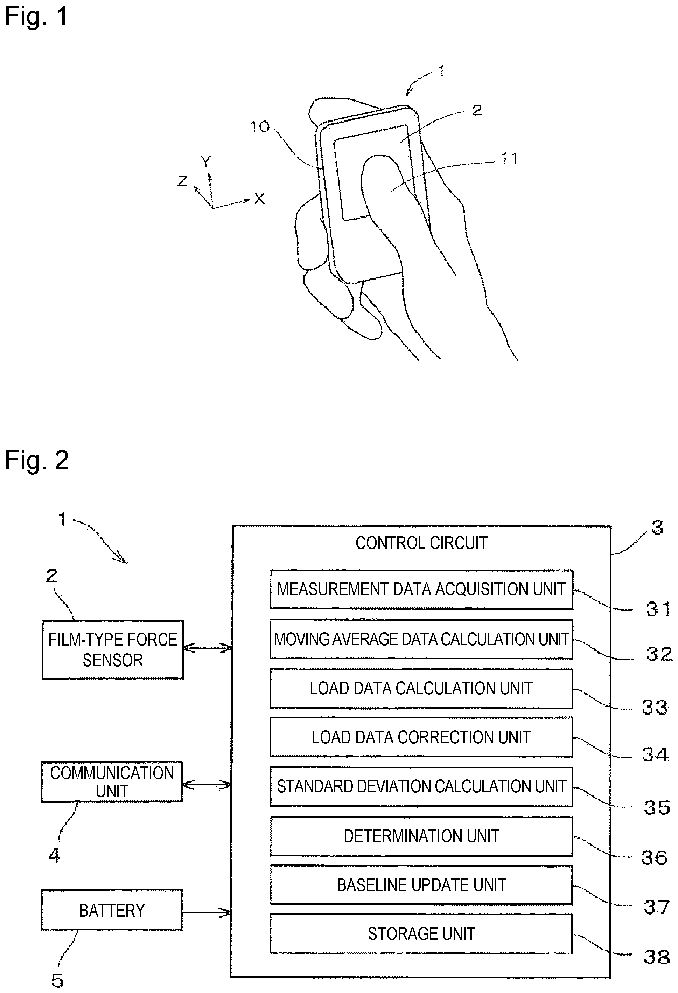

First, an entire configuration of an input device 1 according to an embodiment of the present invention is described with reference to Figure 1 and Figure 2. Figure 1 is a schematic diagram of a controller that is an example of an input device using a film-type force sensor according to the present invention. Figure 2 is a configuration diagram of the input device using the film-type force sensor according to the present invention.

The input device 1 includes a housing 10, a film-type force sensor 2, a control circuit 3, a communication unit 4, and a battery 5 (see Figure 1 and Figure 2).

The film-type force sensor 2 is disposed on a surface of the housing 10, and detects capacitance values that change based on a load applied by a finger 11.

The control circuit 3 is electrically connected to the film-type force sensor 2, and is housed inside the housing 10. The control circuit 3 controls the film-type force sensor 2, and performs acquisition, calculation, update, and correction of various kinds of data on a detection signal from the film-type force sensor 2.

The communication unit 4 is housed inside the housing 10, is electrically connected to the control circuit 3, and communicates with an unillustrated external electronic device.

The battery 5 is housed inside the housing 10, and supplies power to the control circuit 3.

Functions of the above-described components are described in more detail below.

### (2) Housing

Examples of a material of the housing 10 include a general-purpose resin such as a polystyrene resin, a polyolefin resin, an ABS resin, an AS resin, and an AN resin. Examples of the material of the housing 10 further include a general-purpose engineering resin such as a polyphenylene oxide/polystyrene resin, a polycarbonate resin, a polyacetal resin, a polyacrylic resin, a polycarbonate/denatured polyphenylene ether resin, a polybutylene terephthalate resin, an ultrahigh-molecular weight polyethylene resin, and a super-engineering resin such as a polysulfone resin, a polyphenylene sulfide resin, a polyphenylene oxide resin, a polyallylate resin, a polyether-imide resin, a polyimide resin, a liquid crystal polyester resin, and a polyallyl heat-resistant resin.

### (3) Film-Type Force Sensor

As the film-type force sensor 2, sensors of a capacitance system, a piezoelectric system, a distortion gage system, and the other systems are generally known. In the present embodiment illustrated in Figure 7, the film-type force sensor 2 is a sensor that detects capacitance values that change based on a load applied in an obliquely downward direction including an X-axis direction and a Z-axis direction by the finger 11 of a user.

The film-type force sensor 2 includes an upper electrode member 24, a lower electrode member 27, and an air layer or elastic layer 21. The upper electrode member 24 includes an upper electrode 23 including a plurality of electrodes 23a, 23b, ... that are linear patterns extending in a Y-axis direction and arranged side by side in the X-axis direction on an upper support 22. The lower electrode member 27 is disposed to face the upper electrode member 24, and includes a lower electrode 26 including a plurality of electrodes 26a, 26b, ... that are linear patterns extending in the Y-axis direction and arranged side by side in the X-axis direction on a lower support 25. The air layer or elastic layer 21 is sandwiched between the upper electrode member 24 and the lower electrode member 27. In the example illustrated in Figure 7, a surface of the upper electrode member 24 on which the upper electrode 23 is provided, and a surface of the lower electrode member 27 on which the lower electrode 26 is provided face each other. The upper support 22 of the upper electrode member 24 also serves as a protective layer protecting the upper electrode 23.

The film-type force sensor 2 having such a configuration calculates values Fₓ and F_{z} (component forces Fₓ and F_{z} in X-axis direction and Z-axis direction) of the applied load by using change of the capacitance values generated by variation in distance between the electrodes when the load is applied.

In other words, when the load in the obliquely downward direction is applied to a surface of the film-type force sensor 2 by the finger 11, the elastic layer 21 deforms, one electrode 23a of the upper electrode 23 of the upper electrode member 24 moves in a horizontal direction (X-axis direction) and a perpendicular direction (Z-axis direction) based on intensity of the load, and not only a distance between the electrode 23a and one electrode 26a of the lower electrode 26 positioned obliquely below the electrode 23a but also a distance between the electrode 23a and an electrode 26b adjacent to the electrode 26a are changed. Therefore, by measuring change of a capacitance value between the upper electrode 23a and the lower electrode 26a and change of a capacitance value between the upper electrode 23a and the lower electrode 26b, intensity of not only the load (pressure) in the perpendicular direction (Z-axis direction) but also the load (also referred to as shear force) in the horizontal direction (X-axis direction) can be measured.

Examples of a material constituting the upper support 22 and the lower support 25 include a sheet of a thermoplastic or thermosetting resin such as acrylic, urethane, fluorine, polyester, polycarbonate, polyacetal, polyamide, and olefin, and a sheet of an ultraviolet-curable resin such as cyanoacrylate; however, the material is not particularly limited. The film-type force sensor 2 including the upper support 22 and the lower support 25 can be disposed along a shape of the housing 10. Therefore, the film-type force sensor 2 can be mounted on, for example, a columnar surface.

The upper electrode 23 and the lower electrode 26 can be made of a material having conductivity. Examples of the material having conductivity include a film of a metal such as gold, silver, copper, platinum, palladium, aluminum, and rhodium, and a conductive paste film obtained by dispersing a conductive material such as particles of these metals, metal nanofiber, and carbon nanotube in a resin binder; however, the material is not particularly limited. In a case of the metal film, a method in which a conductive film is formed on an entire surface by a plating method, a sputtering method, a vacuum deposition method, an ion plating method, or the like, and is then patterned by etching is usable as a formation method. In a case of the conductive paste film, a method in which the conductive paste film is directly patterned by a printing method such as a screen printing method, a gravure printing method, and an offset printing method is usable as a formation method.

As the elastic layer 21, for example, a sheet of a synthetic resin having elasticity, such as silicone, fluorine, urethane, epoxy, ethylene vinyl acetate copolymer, polyethylene, polypropylene, polystyrene, and butadiene rubber, a stretchable non-woven sheet is usable. In particular, an elastic sheet of a silicone resin such as silicone gel and silicone elastomer is more preferable because of being excellent in durability in a wide temperature range from a low temperature to a high temperature and excellent in elasticity. The elastic layer 21 is not limited to a sheet formed by a common sheet molding method such as extrusion molding, and may be a coating layer formed by printing or with a coater or the like.

In a case where a resin such as polyethylene, polypropylene, and polystyrene is selected as a material of the elastic layer 21, the resin is preferably put in a state of a foam by finely dispersing gas into the synthetic resin because a single substance of the synthetic resin is low in elasticity.

### (4) Control Circuit

Although not illustrated, the control unit 3 includes, for example, a substrate, and a CPU (Central Processing Unit), a RAM, a ROM, and other electronic parts mounted on the substrate. The control unit 3 is a device for controlling the other devices based on hardware including the CPU and the memories, and software.

To realize accurate load detection as a feature of the present invention, the control circuit 3 at least includes a measurement data acquisition unit 31, a moving average data calculation unit 32, a load data calculation unit 33, a load data correction unit 34, a standard deviation calculation unit 35, a determination unit 36, a baseline update unit 37, and a storage unit 38 (see Figure 2).

The measurement data acquisition unit 31 acquires measurement data including a time series of capacitance change amounts detected by the film-type force sensor 2. The acquisition includes driving control of the film-type force sensor 2. The acquired measurement data on the capacitance change amounts (for example, measured as capacitance change amount F_{z}^{meas} when load F_{z} in Z direction is applied) is transmitted to and stored in the storage unit 38, and is also transmitted to the moving average data calculation unit 32. The number of pieces of acquired measurement data is, for example, one piece per 10 milliseconds.

The moving average data calculation unit 32 calculates moving average data by smoothing fine variation of the measurement data with any number of terms (for example, capacitance change amount F_{z}^{meas} of measurement data is calculated as smoothed moving average value F_{z}^{ave}). By the smoothing, slow trend variation can be extracted from the measurement data, and influence of noise can be suppressed. The calculated moving average data is transmitted to and stored in the storage unit 38, and is also transmitted to the load data calculation unit 33. The number of terms as an average target of the measurement data is, for example, ten.

The load data calculation unit 33 calculates load data (for example, calculated as load value K_{z}F_{z}^{ave}) by multiplying each value of the moving average data by any coefficient (for example, coefficient K_{z} for smoothed moving average value F_{z}^{ave}) indicating sensitivity of the film-type force sensor 2 (see Figure 5). The calculated load data is transmitted to and stored in the storage unit 38, and is also transmitted to the standard deviation calculation unit 35. The coefficient indicating sensitivity of the sensor is, for example, 1000 to 6000.

The load data correction unit 34 corrects the load data by subtracting a baseline value (for example, baseline value F_{z}^{BL}) from each value of the load data (for example, load value K_{z}F_{z}^{ave}). The baseline value is load data calculated in a state where no load is applied to the film-type force sensor. Therefore, it is necessary to remove the baseline value from the load data. The corrected load data is transmitted to and stored in the storage unit 38.

As described above, there is a problem that the load detection using the film-type force sensor 2 of the capacitance system is affected by restorability. In other words, when a load is applied to deform the film-type force sensor 2 (see Figure 7) and is then released, the film-type force sensor 2 is still deformed and does not immediately return to a shape before the load is applied, and the capacitance value is increased from an initial value even in a no-load state. As a result, a load calculation value calculated from the capacitance values does not return to the baseline value in the no-load state (see Figure 6). Therefore, the capacitance values in the no-load state are transited on a moment-to-moment basis due to influence of restorability, and it is accordingly necessary to update the baseline value based on the transition.

In addition, the baseline value to be updated is acquired based on data on the load calculation value (value K_{z}F_{z}^{ave} calculated in Z-axis direction in the example illustrated in Figure 6) calculated in the state where no load is applied to the film-type force sensor 2; however, it is conventionally difficult to accurately determine whether a load is applied to the film-type force sensor 2 or the film-type force sensor 2 is affected by restorability, from the load data (see Figure 8). In other words, update of the baseline value is not easy.

Therefore, in the present invention, the standard deviation calculation unit 35 and the determination unit 36 are provided in the control unit 3 to enable acquisition of the updated baseline value at a suitable timing.

The standard deviation calculation unit 35 calculates a standard deviation within any time range from each time point of the load data. The calculated standard deviation is transmitted to and stored in the storage unit 38, and is also transmitted to the determination unit 36. The time range as the calculation target of the standard deviation is, for example, 1000 msec.

The standard deviation is an index indicating a size of variation of the data. When the data is concentrated near an average value, the standard deviation is reduced, whereas when the data is spread from the average value, the standard deviation is increased. In a case where a load is applied to the surface of the film-type force sensor 2 by the finger 11 of the user, application of the load is largely varied because a body surface of a human performs fine invisible motion due to breathing, blood flowing, and the like. In other words, difference based on whether the finger 11 of the user is in contact with the surface of the film-type force sensor 2 appears in a variation degree of the load data.

As the target data when the standard deviation is calculated, each time point of the above-described load data can be set as a start time point, an intermediate time point, or an end time point.

In a case where the standard deviation is greater than any threshold, the determination unit 36 determines that a load is applied to the film-type force sensor. In a case where the standard deviation is less than or equal to the threshold, the determination unit 36 determines that no load is applied to the film-type force sensor. The threshold is, for example, 0.1 N**.**

In a case where it is determined that no load is applied, the baseline update unit 37 updates the baseline value by replacing the baseline value with a value at a time when it is determined that no load is applied in the load data. The updated baseline value is transmitted to and stored in the storage unit 38. In the present specification, "update" is defined as designation of a new baseline value, and is distinguished from "storage" of the updated value.

Further, in the present embodiment, the baseline update unit 37 updates the baseline value once every time the no-load state occurs during a period from a time when it is determined that no load is applied until a time when it is determined that a load is applied again. The update of the baseline value includes a case where a numerical value after the update is equal to a numerical value before the update.

### (5) Communication Unit

The communication unit 4 communicates with an external electronic device through a wireless LAN such as WI-FI (R), BLUETOOTH(R), and NFC. The communication unit 4 can perform communication in one direction or bi-direction. The controller that is the input device 1 according to the present embodiment can control a plurality of external electronic devices simultaneously or individually.

Examples of the external electronic device to be communicated include a head-mounted display and smart glasses used for xR, a smart television, a laptop computer, a desktop computer, a tablet computer, an audio system of an automobile, a home-use, business-use, or environment-use automatic control device, and any other devices or systems; however, the external electronic device is not limited thereto.

### (6) Battery

As the battery 5, a rechargeable battery such as a lithium battery can be used. In a case of the rechargeable battery, the user can charge the input device 1 by using a USB or by placing the input device 1 on a charging pad. Alternatively, a non-rechargeable battery may be used as the battery 5, and may be taken out from the inside of the housing 10 and replaced.

### (7) Load Detection Method

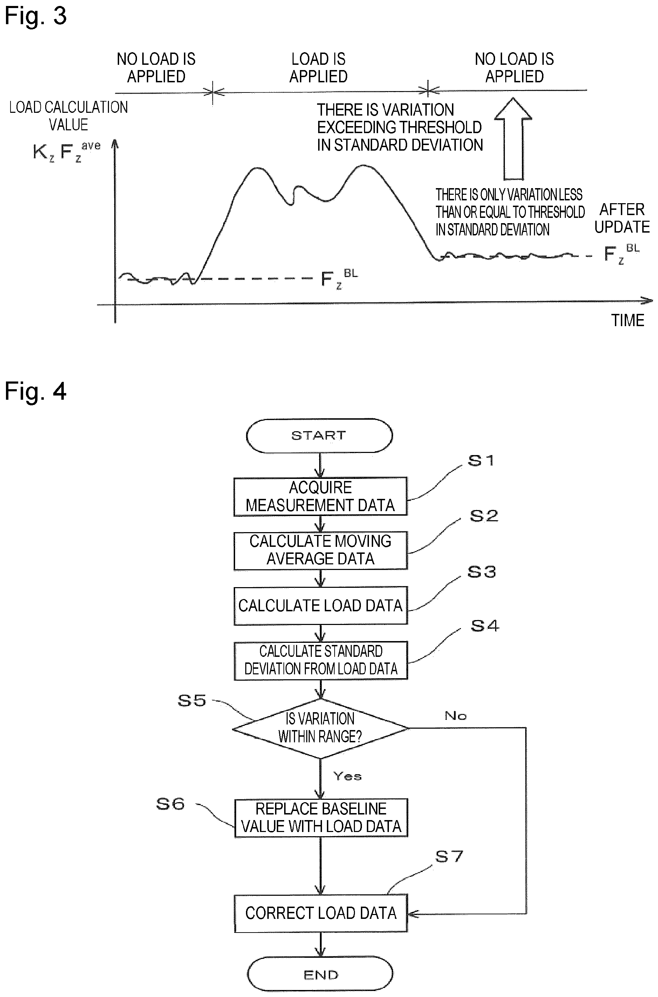

In the input device 1 using the film-type force sensor having the above-described configuration, a load detection method by the control unit 3 is described with reference to Figure 4. Figure 4 is a flowchart illustrating an example of a load detection process in the input device using the film-type force sensor according to the present invention. Steps S1 to S7 in the flowchart illustrated in Figure 4 are described below.

First, in step S1 of Figure 4, the measurement data acquisition unit 31 of the control unit 3 acquires the measurement data including a time series of the capacitance change amounts detected by the film-type force sensor 2. The acquired measurement data on the capacitance change amounts (for example, measured as capacitance change amount F_{z}^{meas} when load F_{z} in Z-axis direction is applied) is transmitted to and stored in the storage unit 38 (not illustrated as step in flowchart). The process then proceeds to step S2.

In step S2, the moving average data calculation unit 32 of the control unit 3 calculates the moving average data by smoothing fine variation of the measurement data called from the storage unit 38, with any number of terms. The calculated moving average data is transmitted to and stored in the storage unit 38 (not illustrated as step in flowchart). The process then proceeds to step S3.

In step S3, the load data calculation unit 33 of the control unit 3 calculates load data by multiplying each value of the moving average data called from the storage unit 38, by any coefficient indicating sensitivity of the film-type force sensor. The calculated load data is transmitted to and stored in the storage unit 38 (not illustrated as step in flowchart). The process then proceeds to step S4.

In step S4, the standard deviation calculation unit 35 of the control unit 3 calculates a standard deviation within any time range from each time point of the load data called from the storage unit 38. The calculated standard deviation is transmitted to and stored in the storage unit 38 (not illustrated as step in flowchart). The process then proceeds to step S5.

In step S5, in a case where the standard deviation called from the storage unit 38 is greater than any threshold (No for condition "whether variation is within range?" in step S5), the determination unit 36 of the control unit 3 determines that a load is applied to the film-type force sensor, whereas in a case where the standard deviation is less than or equal to the threshold (Yes for condition "whether variation is within range?" in step S5), the determination unit 36 of the control unit 3 determines that no load is applied to the film-type force sensor. When it is determined that a load is applied, the process proceeds to step S7 while the baseline value is not updated. In contrast, when it is determined that no load is applied, the process proceeds to step S6.

In step S6, the baseline update unit 37 updates the baseline value by replacing the baseline value with a value at a time when it is determined that no load is applied in the load data. The updated baseline value is transmitted to and stored in the storage unit 38 (not illustrated as step in flowchart). The process then proceeds to step S7.

Figure 3 is a conceptual diagram illustrating relationship between a time series of the load calculation value (K_{z}F_{z}^{ave}) in the Z-axis and the baseline value (F_{z}^{BL}) in the case where the baseline value is updated, in the load detection method in the input device using the film-type force sensor according to the present invention (same applies to X-axis and Y-axis).

In the present embodiment, in step S6, the baseline value is updated once every time the no-load state occurs during a period from a time when it is determined that no load is applied until a time when it is determined that a load is applied again.

In step S7, the load data correction unit 34 corrects the load data by subtracting the baseline value (for example, baseline value F_{z}^{BL}) from each value of the load data (for example, load value K_{z}F_{z}^{ave}) called from the storage unit 38. At this time, in a case where the process proceeds from step S5 to step S7 without through step S6, the baseline value called from the storage unit 38 is a non-updated value. In a case where the process proceeds from step S5 to step S7 through step S6, the baseline value called from the storage unit 38 is the updated value. The corrected load data is transmitted to and stored in the storage unit 38 (not illustrated as step in flowchart).

As described above, in the load detection method in the input device 1 using the film-type force sensor 2 according to the present invention, the variation degree (standard deviation) of the load data is calculated and compared with the threshold, to determine whether the finger 11 of the user is in contact with the surface of the film-type force sensor **2,** and the updated baseline value is acquired at a suitable timing (see Figure 3). This enables accurate load detection.

### [Second Embodiment]

A second embodiment of the present invention is described below with reference to drawings.

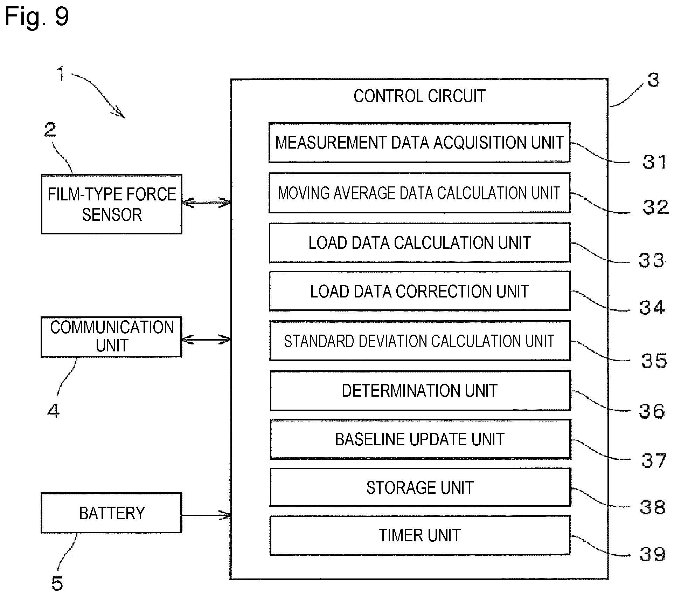

Figure 9 is another configuration diagram of the input device using the film-type force sensor according to the present invention.

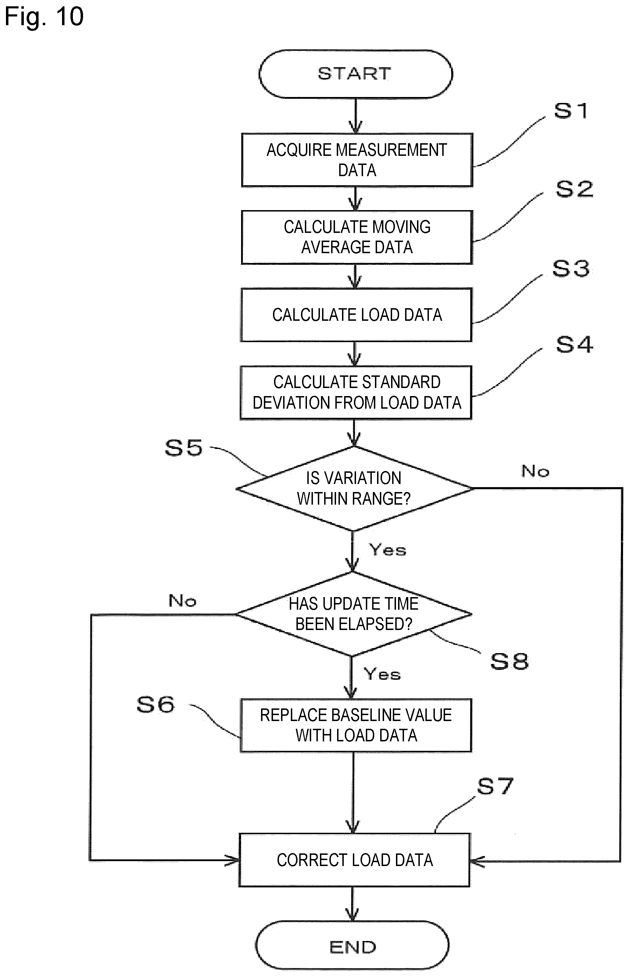

Figure 10 is a flowchart illustrating another example of the load detection process in the input device using the film-type force sensor according to the present invention.

In the first embodiment, the baseline update unit 37 of the control unit 3 updates the baseline value once every time the no-load state occurs during a period from a time when it is determined that no load is applied until a time when it is determined that a load is applied again. However, the input device and the load detection method for the input device according to the present invention are not limited thereto. For example, the baseline update unit 37 may update the baseline value to a latest value at a time when it is determined that no load is applied in the load data, at predetermined time intervals after acquisition of the measurement data is started (see Figure 10).

More specifically, the control circuit 3 includes a timer unit 39 measuring an elapsed time after acquisition of the measurement data is started, as a part of the baseline update unit 37 or separately from the baseline update unit 37 (see Figure 9). In a case where the elapsed time after acquisition of the measurement data is started, measured by the timer unit 39 reaches a predetermined time, the baseline update unit 37 updates the baseline value.

With such a configuration, data reception/processing efficiency can be advantageously increased as compared with a case where update is performed every time the no-load state occurs.

In this case, unlike the first embodiment (see Figure 4), the flowchart indicating the load detection process in the input device includes step S8 between step S5 and step S6 as illustrated in Figure 10.

In step S8, in a case where the elapsed time after acquisition of the measurement data is started, measured by the timer unit 39 of the control unit 3 does not reach an update time at predetermined time intervals (No for condition "whether update time has been elapsed?" in step S8), the process proceeds to step S7 while the baseline value is not updated. In a case where the elapsed time after acquisition of the measurement data is started reaches the update time at the predetermined time intervals (Yes for condition "whether update time has elapsed?" in step S8), the process proceeds to step S6.

The other configurations are similar to the configurations according to the first embodiment. Thus, description thereof is omitted.

### [Third Embodiment]

A third embodiment of the present invention is described below with reference to drawings.

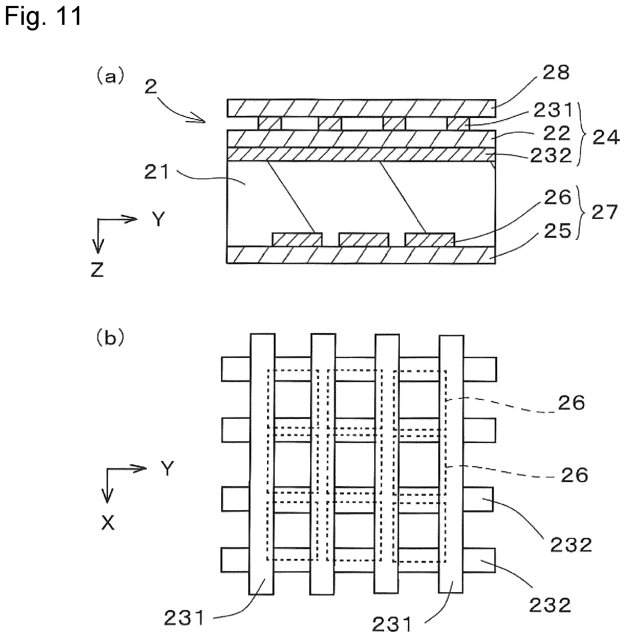

Figure 11 is a schematic diagram illustrating a configuration example of a film-type triaxial force sensor of a capacitance system.

In the first embodiment, the film-type force sensor 2 is a so-called biaxial force sensor that detects the capacitance values that change based on the load applied in the obliquely downward direction including the X-axis direction and the Z-axis direction by the finger 11 of the user. However, the input device according to the present invention is not limited thereto. For example, the film-type force sensor 2 may be a film-type triaxial force sensor that detects capacitance values that change based on a load applied in three axes XYZ.

In the film-type triaxial force sensor, for example, the lower electrode 26 of the lower electrode member 27 has an island-shaped pattern, the upper electrode 23 of the upper electrode member 24 includes two layers of a front-side upper electrode 231 and a rear-side upper electrode 232 separately provided on respective surfaces of the upper support 22 (see Figure 11(a)), the front-side upper electrode 231 and the rear-side upper electrode 232 have a plurality of linear patterns intersecting each other in a planar view (see Figure 11(b)), and a part of the island-shaped pattern of the lower electrode 26 overlaps with a part of the patterns of the front-side upper electrode 231 and a part of the patterns of the rear-side upper electrode 232 in a planar view. In this case, as illustrated in Figure 11(a), to protect the front-side upper electrode 231 of the upper electrode member 24, a protective layer 28 is preferably provided on a surface of the upper electrode member 24 on a side opposite to the elastic layer 21.

In the example illustrated in Figure 11(b), an intersection angle of the front-side upper electrode 231 and the rear-side upper electrode 232 is 90 degrees (namely, orthogonal) such that the linear patterns of the front-side upper electrode 231 extend in the X-axis direction and are arranged side by side in the Y-axis direction, and the linear patterns of the rear-side upper electrode 232 extend in the Y-axis direction and are arranged side by side in the X-axis direction; however, the intersection angle is not limited thereto. In a case where the intersection angle is an orthogonal angle, the pattern of the lower electrode 26 is a rectangular grid. In a case where the intersection angle is not the orthogonal angle, the pattern of the lower electrode 26 is a parallelogrammatic grid.

The film-type force sensor 2 having such a configuration calculates values Fₓ, F_{y}, and F_{z} (component forces Fₓ, F_{y}, and F_{z} in X-axis direction, Y-axis direction, and Z-axis direction) of the applied load by using change of the capacitance values generated by variation in distance between the electrodes when the load is applied.

In other words, when the load in the obliquely downward direction is applied to the surface of the film-type force sensor 2 by the finger 11, the elastic layer 21 deforms, the front-side upper electrode 231 and the rear-side upper electrode 232 of the upper electrode member 24 move in the horizontal direction (XY-axis directions) and the perpendicular direction (Z-axis direction) based on intensity of the load, a distance and an overlapping area between the lower electrode 26 having the island-shaped pattern and the front-side upper electrode 231, and a distance and an overlapping area between the lower electrode 26 having the island-shaped pattern and the rear-side upper electrode 232 are changed, and as a result, the capacitance values between the electrodes are changed. Therefore, by measuring change of the capacitance values, intensity of not only the load in the perpendicular direction (component force F_{z} in Z-axis direction) but also the load in the horizontal direction (component force F_{y} in Y-axis diction in which linear patterns of front-side upper electrode 231 are arranged, and component force Fₓ in **X-**axis direction in which linear patterns of rear-side upper electrode 232 are arranged) can be measured.

As a material of the front-side upper electrode 231 and the rear-side upper electrode 232, a material similar to the material constituting the upper electrode 23 and the lower electrode 26 according to the first embodiment can be used.

Further, as a material of the protective layer 28, a material similar to the material constituting the upper support 22 and the lower support 25 according to the first embodiment can be used. In addition, as the protective layer 28, a design sheet, leather, rubber, cloth, and the like may be bonded to impart a design.

The other configurations are similar to the configurations according to the first embodiment. Thus, description thereof is omitted.

The film-type force sensor 2 used in the present invention is not limited to the film-type force sensor described in each of the first embodiment and the present embodiment, and a well-known film-type force sensor of a capacitance system can be adopted. For example, embodiments and modifications disclosed in Patent Literature 1 and Patent Literature 2 descried above can be adopted.

### [Modifications]

Although the embodiments of the present invention are described above, the present invention is not limited to the above-described embodiments, and can be variously changed without departing from the spirit of the present invention. In particular, the plurality of embodiments and modifications described in the present specification can be freely combined as necessary.

(a) In each of the above-described embodiments, the example in which the input device 1 transmits the finally calculated and corrected values (for example, Fₓ, F_{y}, and F₂) of the load, to the external electronic device is described; however, the input device 1 according to the present invention is not limited thereto. For example, the control unit 3 may include an event detection unit detecting an event from the values of the load, and information on the detected event may be transmitted to the external electronic device.
(b) In each of the above-described embodiments, the example in which the input device 1 is a controller operating the external electronic device through communication is described; however, the input device 1 according to the present invention is not limited to such a controller. The input device 1 may be integrated with, for example, a head-mounted display and smart glasses used for xR described above, a smart television, a laptop computer, a desktop computer, a tablet computer, an audio system of an automobile, a home-use, business-use, or environment-use automatic control device, and any other devices. In this case, the communication unit 4 is unnecessary. In addition, the battery 5 may be omitted. Furthermore, the input device 1 may include a display device such as an LCD, a microphone, and a speaker.

The input device 1 may be a controller operating the external electronic device through a cable such as a USB cable.

### Reference Signs List

- 1: Input device (controller)
- 2: Film-type force sensor
- 21: Elastic layer
- 22: Upper support
- 23, 23a: Upper electrode
- 231: Front-side upper electrode
- 232: Rear-side upper electrode
- 24: Upper electrode member
- 25: Lower support
- 26, 26a, 26b: Lower electrode
- 27: Lower electrode member
- 28: Protective layer
- 3: Control unit
- 31: Measurement data acquisition unit
- 32: Moving average data calculation unit
- 33: Load data calculation unit
- 34: Load data correction unit
- 35: Standard deviation calculation unit
- 36: Determination unit
- 37: Baseline update unit
- 38: Storage unit
- 39: Timer unit
- 4: Communication unit
- 5: Battery
- 10: Housing
- 11: Finger

## Claims

1. An input device using a film-type force sensor, the input device comprising:
a film-type force sensor disposed on a surface of a housing, and configured to detect capacitance values that change based on a load applied by a finger; and
a control circuit electrically connected to the film-type force sensor, and housed inside the housing,
wherein
the control circuit includes:
a measurement data acquisition unit configured to acquire measurement data including a time series of capacitance change amounts detected by the film-type force sensor;
a moving average data calculation unit configured to calculate moving average data by smoothing fine variation of the measurement data with any number of terms;
a load data calculation unit configured to calculate load data by multiplying each value of the moving average data by any coefficient indicating sensitivity of the film-type force sensor;
a load data correction unit configured to correct the load data by subtracting a baseline value from each value of the load data;
a standard deviation calculation unit configured to calculate a standard deviation within any time range from each time point of the load data;
a determination unit configured, in a case where the standard deviation is greater than any threshold, to determine that a load is applied to the film-type force sensor, and in a case where the standard deviation is less than or equal to the threshold, to determine that no load is applied to the film-type force sensor;
a baseline update unit configured, in a case where it is determined that no load is applied, to update the baseline value by replacing the baseline value with a value at a time when it is determined that no load is applied in the load data; and
a storage unit configured to store the acquired value, the calculated value, the updated value, and the corrected value.

2. The input device using the film-type force sensor according to claim 1**,** wherein the baseline update unit updates the baseline value every time a no-load state occurs during a period from a time when it is determined that no load is applied until a time when it is determined that a load is applied again.

3. The input device using the film-type force sensor according to claim 1, wherein the baseline update unit updates the baseline value to a latest value at the time when it is determined that no load is applied in the load data, at predetermined time intervals after acquisition of the measurement data is started.

4. The input device using the film-type force sensor according to claim 1, wherein the film-type force sensor is a film-type triaxial force sensor configured to detect capacitance values that change based on a load applied in three axes XYZ.

5. A load detection method for an input device using a film-type force sensor, the input device including a film-type force sensor disposed on a surface of a housing and configured to detect capacitance values that change based on a load applied by a finger, and a control circuit electrically connected to the film-type force sensor and housed inside the housing, the load detection method comprising:
a measurement data acquisition step of acquiring measurement data including a time series of capacitance change amounts detected by the film-type force sensor;
a moving average data calculation step of calculating moving average data by smoothing fine variation of the measurement data with any number of terms;
a load data calculation step of calculating load data by multiplying each value of the moving average data by any coefficient indicating sensitivity of the film-type force sensor;
a load data correction step of correcting the load data by subtracting a baseline value from each value of the load data;
a standard deviation calculation step of calculating a standard deviation within any time range from each time point of the load data;
a determination step of, in a case where the standard deviation is greater than any threshold, determining that a load is applied to the film-type force sensor, and in a case where the standard deviation is less than or equal to the threshold, determining that no load is applied to the film-type force sensor;
a baseline update step of, in a case where it is determined that no load is applied, updating the baseline value by replacing the baseline value with a value at a time when it is determined that no load is applied in the load data; and
a storage step of storing the acquired value, the calculated value, the updated value, and the corrected value.

6. The load detection method for the input device using the film-type force sensor according to claim 5, wherein, in the baseline update step, the baseline value is updated every time a no-load state occurs during a period from a time when it is determined that no load is applied until a time when it is determined that a load is applied again.

7. The load detection method for the input device using the film-type force sensor according to claim 5, wherein, in the baseline update step, the baseline value is updated to a latest value at the time when it is determined that no load is applied in the load data, at predetermined time intervals after acquisition of the measurement data is started.

8. The load detection method for the input device using the film-type force sensor according to claim 5, wherein the film-type force sensor is a film-type triaxial force sensor configured to detect capacitance values that change based on a load applied in three axes XYZ.
